Europäisches Patentamt

European Patent Office

Office européen des brevets

(11) Numéro de publication : **0 246 165 B1**

(12) **FASCICULE DE BREVET EUROPEEN**

(45) Date de publication du fascicule du brevet :
**01.04.92 Bulletin 92/14**

(21) Numéro de dépôt : **87401105.9**

(22) Date de dépôt : **15.05.87**

(51) Int. Cl.⁵ : **G02B 6/38**

(54) **Embout de connecteur pour fibres optiques monomode à maintien de polarisation et son procédé de réglage.**

(30) Priorité : **15.05.86 FR 8606993**

(43) Date de publication de la demande :
**19.11.87 Bulletin 87/47**

(45) Mention de la délivrance du brevet :
**01.04.92 Bulletin 92/14**

(84) Etats contractants désignés :
**CH DE GB LI**

(56) Documents cités :
**EP-A- 0 131 488**
**EP-A- 0 165 837**
**DE-A- 3 042 609**
**FR-A- 2 553 525**
**PATENT ABSTRACTS OF JAPAN, vol. 9, no. 33 (P-334)[1756], 13 février 1985; & JP-A-59 176 714**

(73) Titulaire : **RADIALL INDUSTRIE, Société Anonyme dite:**
**101, rue Philibert Hoffmann Zone Industrielle Ouest**
**F-93116 Rosny-Sous-Bois (FR)**

(72) Inventeur : **Yin, Huan-Ben**
**14 rue du Loing**
**F-75014 Paris (FR)**
Inventeur : **Valade, Norbert**
**32 rue du Général Giraud**
**F-93150 Le Blanc-Mesnil (FR)**

(74) Mandataire : **Nony, Michel et al**
**Cabinet NONY & CIE, 29, rue Cambacérès**
**F-75008 Paris (FR)**

## Description

La présente invention est relative à un procédé d'ajustement d'un embout de connecteur pour une fibre optique monomode à maintien de polarisation, c'est-à-dire une fibre optique comportant, à l'intérieur d'une gaine optique de section circulaire, un coeur elliptique avec, le cas échéant, de part et d'autre du coeur, des éléments de contraintes provoquant sur le coeur une contrainte asymétrique interne, ou encore un coeur circulaire entouré par un élément de contrainte elliptique.

De telles fibres sont par exemple à l'heure actuelle utilisées pour réaliser des capteurs par exemple dans des interféromètres de haute sensibilité exigeant un état stable de polarisation linéaire.

L'utilisation de telles fibres est en outre envisagée pour des systèmes de télécommunications à très haute bande passante.

La connexion de ces fibres complexes exige un alignement des axes principaux du coeur elliptique ou de l'élément de contrainte elliptique entourant un coeur circulaire afin de diminuer les pertes de connexion et surtout ne pas pertuber l'état de polarisation.

La société déposante a déjà décrit dans EP-A-0063085 un connecteur pour fibres optiques comportant deux embouts mâles montés à l'extrémité de chacune des fibres connectées et un raccord femelle de reconstitution comportant un perçage longitudinal pour supporter et aligner les deux embouts face à face.

Le raccord femelle comporte dans sa partie centrale, à l'intérieur de son perçage longitudinal, un corps de butée pour les embouts mâles présentant un orifice axial traversant et, autour de celui-ci, une portée de contact en regard de chacun des embouts mâles. Chacun des embouts mâles présente pour sa part une protubérance tubulaire axiale susceptible de s'engager dans l'orifice du corps de butée et un conduit dans lequel la fibre optique peut être introduite avec jeu et immobilisée de manière que son extrémité coincide avec l'extrémité de la protubérance, chacun des embouts comportant en outre, en retrait de la protubérance, et entourant la partie arrière de celle-ci un évidement annulaire dont la paroi définit une portée de contact avec la portée en regard du corps de butée du raccord femelle sous l'action de moyens de pression longitudinaux. Les portées en regard du corps de butée et de chacun des embouts mâles sont agencées de façon telle que, lors de tout mouvement relatif des portées en contact, l'extrémité d'une fibre, au niveau de la face d'extrémité de la protubérance, d'un embout mâle, soit maintenue à une distance constante prédéterminée du centre du corps de butée. De préférence, l'organe de butée est une sphère, l'évidement annulaire de chaque embout mâle présentant une paroi de profil

La présente invention se propose d'ajuster un embout mâle pour un connecteur de ce type, ledit embout présentant les caractéristiques générales des embouts mentionnés ci-dessus et étant apte à coopérer avec un raccord de reconstitution du même type que celui décrit ci-dessus pour réaliser plus spécifiquement la connexion de fibres optiques monomode à maintien de polarisation.

L'embout à ajuster selon la présente invention comprend un corps extérieur tubulaire comportant à son extrémité avant un évidement présentant une paroi de profil conique, un élément cylindrique intérieur à l'intérieur duquel une firbre optique peut être immobilisée, en particulier par collage, ledit élément intérieur faisant saillie de ladite extrémité du corps extérieur, ledit corps extérieur comportant des trous radiaux pour l'engagement d'organes tels que des poinçons pour centrer mécaniquement l'élément intérieur dans le corps extérieur. Pour la mise en oeuvre du procédé d'ajustement selon l'invention l'embout comprend une douille montée à rotation autour dudit corps, et des moyens pour immobiliser ladite douille, de préférence par collage, sur ledit corps, ladite douille étant en outre munie d'un repère d'indexation.

Les caractéristiques du procédé d'ajustement selon l'invention font l'objet de la revendication 1.

De préférence le repère d'indexation est une rainure par laquelle l'embout est susceptible d'être engagé sur une clavette correspondante réalisée dans le raccord femelle de reconstitution du connecteur permettant à l'embout d'être mis en place dans le raccord de reconstitution en conservant la position angulaire de la fibre déterminée comme cela sera expliqué plus loin.

Pour l'immobilisation de l'élément intérieur contenant la fibre optique dans le corps extérieur de l'embout, l'embout à ajuster selon l'invention comporte avantageusement les caractéristiques décrites dans EP-A-0165837. Ainsi, le corps extérieur peut présenter dans son évidement intérieur, au voisinage de la zone présentant les trous radiaux pour l'engagement de poinçons, une portée plane perpendiculaire à son axe longitudinal et un noyau rigide mis en place et immobilisé autour de l'élément intérieur, ledit noyau comportant une portée plane perpendiculaire à l'axe longitudinal de l'élément et une portée périphérique disposée en regard des trous radiaux du corps extérieur, un appui axial élastique étant exercé sur le noyau de façon à presser en contact mutuel les portées planes du corps extérieur et du noyau solidaire de l'élément intérieur.

L'appui élastique est avantageusement exercé par un ressort hélicoïdal de compression prenant appui, d'une part sur une portée du noyau, parallèle et axialement opposée à ladite portée plane, et d'autre part sur une paroi constituant la face arrière de l'évidement du corps extérieur. Ladite paroi arrière est formée sur une pièce d'obturation de l'extrémité arrière du corps, engagée dans celui-ci, et munie d'un conduit longitudinal pour le passage de la fibre et d'au moins un trou radial dont l'utilité sera expliquée plus loin, le ou lesdits trous étant aptes à être remplis d'une résine.

Pour effectuer le centrage de la fibre dans l'embout on procède, comme décrit dans EP-A-0063085 et EP-A-0165837 en illuminant la fibre par une lumière blanche au travers du trou prévu dans la pièce d'obturation engagée à l'arrière du corps, l'embout étant maintenu en regard d'une lunette munie d'un réticule en forme de croisillon.

On amène ainsi par l'action de poinçons engagés dans les trous radiaux du corps le centre du coeur elliptique de la fibre ou le coeur circulaire de la fibre entouré de l'élément de contrainte elliptique à coincider avec le centre du croisillon de la lunette en regard de laquelle est disposé l'embout, après quoi, on met en oeuvre le procédé selon la présente invention pour réaliser une orientation angulaire du coeur de la fibre par rotation relative de la douille entourant le corps. On amène ainsi le grand axe du coeur elliptique ou de l'élément de contrainte elliptique entourant le coeur circulaire de la fibre à coincider avec l'axe horizontal ou vertical voulu du croisillon, après quoi, on immobilise par collage la douille sur le corps extérieur de l'embout par injection de résine dans le ou les orifices radiaux prévus à cet effet. La position angulaire ainsi réalisée de la fibre dans le corps d'embout est matérialisée par le repère d'indexation dont est muni le corps extérieur d'embout, notamment la rainure d'indexation qu'il suffit alors d'engager, lors du montage de l'embout dans le raccord de reconstitution, sur la clavette correspondante dont est muni ce dernier. La polarisation de la fibre ainsi réalisée de la même manière pour les deux embouts d'un même connecteur sera conservée dans la connexion.

Dans le but de mieux faire comprendre l'invention on va maintenant en décrire à titre d'exemple nullement limitatif un mode de réalisation en se référant au dessin annexé dans lequel :

– la figure 1 est une vue en coupe d'un embout selon l'invention,

– les figures 2a, 2b, 2c sont des vues en coupe schématique de trois exemples de fibres optiques monomode à maintien de polarisation utilisables avec l'embout de la figure 1, et

– les figures 3 à 5 illustrent l'image observée dans la lunette en cours de réglage au cours de trois étapes successives.

L'embout à ajuster selon l'invention comporte un corps extérieur tubulaire 1 dont l'extrémité avant comporte un évidement annulaire présentant une paroi de cavité de forme conique 2. Cette paroi 2 est réalisée sur une pièce 3 fixée dans le corps et comportant une portée plane 4 perpendiculaire à l'axe longitudinal du corps 1.

L'extrémité arrière du corps 1 est obturée par une pièce d'obturation 5 munie d'une portée frontale 6, et présentant un conduit axial 7 pour le passage d'une fibre optique et au moins un trou radial 8. A l'intérieur du corps est mis en place un élément cylindrique tubulaire métallique 9 dont l'extrémité avant 10 fait saillie du corps 2.

Une fibre optique monomode à maintien de polarisation 11 est mise en place dans un conduit axial prévu à cet effet dans l'élément 9. La fibre 11 est immobilisée dans l'élément intérieur 9 de préférence par collage d'extrémité.

Auparavant on a mis en place et solidarisé autour de l'élément 9 un noyau rigide 12 présentant une portée frontale 13 susceptible de venir en appui plan sur plan contre la portée 4 de la pièce 3 en étant pressé à force contre celle-ci par un ressort hélicoïdal 14 comprimé entre la portée arrirère 15 du noyau 12 et la portée 6 de la pièce d'obturation arrière 5. Dans la position de blocage illustrée une portée périphérique 16 du noyau se trouve en regard de trous radiaux 17, de préférence au nombre de quatre, équiangulairement répartis, traversant la paroi du corps 1.

Il est prévu autour du corps 1, vers la partie arrière de celui-ci, une douille 18 montée libre en rotation autour du corps et munie d'une rainure d'indexation 19. La douille 18 comporte également une pluralité d'orifices radiaux 20 pour l'injection d'une résine permettant d'immobiliser par collage la douille 18 sur le corps 2 dans une position angulaire définie.

Il est enfin prévu une bague 21 permettant de solidariser l'embout sur un raccord femelle de reconstitution tel que décrit dans EP-A-0063085 pour réaliser un connecteur.

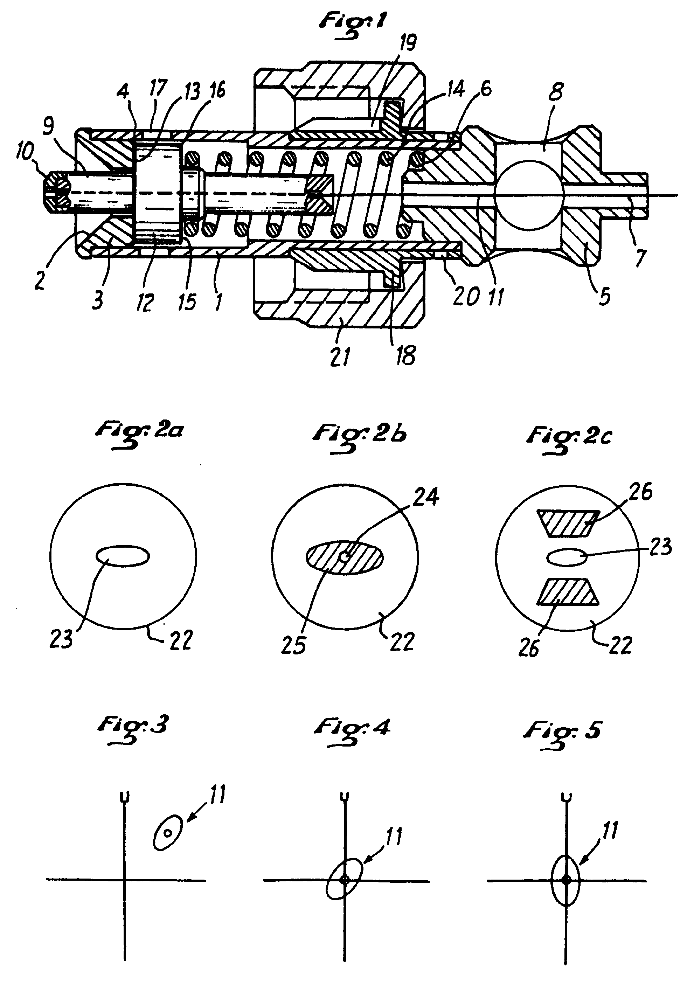

On a illustré aux figures 2a, 2b et 2c, trois exemples de structures de fibres optiques monomode à maintien de polarisation utilisables selon l'invention.

Dans la figure 2a la fibre comporte une gaine circulaire 22 entourant un coeur elliptique 23. Dans l'exemple de la figure 2b la fibre comporte une gaine circulaire 22 et un coeur circulaire 24 entouré par un élément de contrainte elliptique 25.

Dans l'exemple de réalisation de la figure 2c la fibre comporte une gaine circulaire 22, un coeur elliptique 23, et deux éléments de contrainte de section sensiblement trapézoïdale 26.

Pour le réglage de l'embout illustré à la figure 1, on procède de la manière suivante :

Après collage et polissage de l'extrémité de la fibre 11 dans l'élément 9, on dispose l'embout en regard d'une lunette de visée comportant un réticule en forme de croisillon. L'illumination par une lumière blanche s'effectue par l'orifice 8 ménagé dans la pièce d'obturation 5. On obtient par exemple l'image illustrée à la figure 3. On effectue ensuite, comme décrit dans EP-A-0165837 un réglage par engagement de micro-poinçons dans les trous radiaux 17 du corps de manière à centrer la fibre optique sur le réticule, comme illustré à la figure 4. On immobilise alors l'élément intérieur 9 solidaire du noyau 12 par collage de ce dernier sur la pièce 3 en effectuant une injection de résine par les trous radiaux 17.

On provoque enfin un mouvement relatif de rotation entre le corps 1 et la douille 18 jusqu'à obtenir la position de la figure 5 ou le grand axe du coeur elliptique de la fibre (figures 2a et 2c) ou le grand axe de la pièce elliptique de contrainte (figure 2b) est aligné sur l'axe vertical du croisillon de la lunette.

Pour terminer on immobilise alors la douille 18 sur le corps 1 par injection de résine dans les trous radiaux 20.

Deux embouts ainsi réalisés peuvent être mis en place dans un raccord femelle de reconstitution possédant des clavettes d'indexation en ligne ou opposées à 180° de manière à réaliser un connecteur, l'orientation angulaire de la fibre étant matérialisée par la rainure d'indexation 19 dont est pourvue la douille 18.

## Revendications

1. Procédé d'ajustement d'un embout de connecteur pour fibre optique monomode à maintien de polarisation, l'embout à ajuster comprenant un corps extérieur tubulaire comportant à son extrémité avant un évidement présentant une paroi de profil conique, un élément cylindrique intérieur à l'intérieur duquel une fibre optique peut être immobilisée, en particulier par collage, ledit élément intérieur faisant saillie de ladite extrémité avant du corps extérieur, ledit corps extérieur comportant des trous radiaux pour l'engagement d'organes tels que des poinçons, pour centrer mécaniquement l'élément intérieur dans le corps extérieur et une douille montée à rotation autour dudit corps extérieur d'embout (1) et munie d'un repère d'indexation procédé dans lequel on met en place l'embout en regard d'une lunette de visée munie d'un réticule, l'on déplace à l'aide des poinçons engagés dans les trous radiaux du corps l'élément intérieur contenant une fibre optique monomode à maintien de polarisation jusqu'à amener le centre du coeur elliptique de la fibre ou le centre du coeur circulaire entouré d'un élément de contrainte elliptique à coincider avec le centre du réticule de la lunette, ensuite par une rotation relative de la douille (18) et dudit corps d'embout (1) on amène les axes du coeur elliptique de la fibre ou respectivement les axes de l'élément de contrainte elliptique entourant le coeur circulaire à coincider avec les axes du réticule de la lunette, puis l'on immobilise la douille par rapport au corps dans la position angulaire obtenue, notamment par colage.

2. Procédé selon la revendication 1, caractérisé par le fait que l'immobilisation de la douille (18) par rapport au corps (1) est effectuée par injection de résine dans des orifices radiaux (20) de ladite douille.

3. Procédé selon l'une quelconque des revendications 1 et 2, caractérisé par le fait que l'on prévoit sur ladite douille (18) un repère d'indexation (19) matérialisant ladite position angulaire obtenue.

4. Procédé selon la revendication 3, caractérisé par le fait que le repère d'indexation (19) est une rainure.

## Patentansprüche

1. Verfahren zum Justieren einer Steckerhülse für optische monomodefasern unter Beibehaltung der Polarisation, wobei die zu justierende Steckerhülse einen rohrförmigen äußeren Körper aufweist mit einer Aushöhlung, deren Wandung ein konisches Profil hat an dessen vorderem Ende und ein zylinderförmiges inneres Element, in dessen Inneren eine optische Faser, insbesondere durch Verkleben, befestigt werden kann, wobei das innere Element gegenüber dem vorderen Ende des äußeren Körpers vorsteht und wobei der äußere Körper radiale Löcher für den Eingriff von Organen, wie z. B. Stangen zum mechanischen Zentrieren des inneren Elements im äußeren Körper aufweist und mit einer Buchse, die drehbar um den Außenkörper der Hülse (1) angeordnet und mit einer Indexierungsmarkierung versehen ist, wobei das Verfahren darin besteht, die Hülse einer Justieroptik mit einem Fadenkreuz gegenüberzustellen, mit Hilfe der in die radialen Löcher des Körpers eingesteckten Stangen das innere Element, das eine optische Monomodefaser enthält, unter Beibehaltung der Polarisation so zu verstellen, bis die Mitte des eliptischen Kerns der Faser oder die Mitte des kreisrunden Kerns, der mit einem eliptischen Spannungselement umgeben ist, mit der Mitte des Fadenkreuzes der Justieroptik in Überlappung zu bringen, anschließend durch eine Relativdrehung der Buchse (18) und des Körpers der Hülse (1) die Achsen des eliptischen Kerns der Faser oder bzw. die Achsen des den kreisrunden Kern umhüllenden eliptischen Spannungselements in Überlappung mit den Achsen des Fadenkreuzes der Justieroptik zu bringen und wobei anschließend die Buchse bezüglich des Körpers in der so erhaltenen Winkelstellung, insbesondere durch Verkleben fixiert wird.

2. verfahren nach Anspruch 1, dadurch gekennzeichnet, daß das Fixieren der Buchse (18) bezüglich des Körpers (1) durch Einspritzen eines Harzes in die radialen Öffnungen (20) der Buchse erfolgt.

3. Verfahren nach einem der Ansprüche 1 und 2, dadurch gekennzeichnet, daß auf der Buchse (18) eine Indexierungsmarkierung (19) vorgesehen ist, die die erhaltene Winkelstellung darstellt.

4. Verfahren nach Anspruch 3, dadurch gekennzeichnet, daß die Indexierungsmarkierung (19) eine Nut ist.

## Claims

1. A method of adjusting a connecting component for a polarisation-maintaining monomode optical fibre, where the connecting component which is to be adjusted comprises an outer tubular body, provided at its front end with a recess having a conical profiled wall, and an internal cylindrical element, inside which an optical fibre can be immobilised, in particular by adhesion, said internal element projecting from said front end of the outer body and said outer body comprising radial holes for the engagement of devices, such as awls, for the mechanical centering of the internal element in the outer body, and a sleeve mounted so as to rotate about said outer body (1) of the connecting component and provided with an indexing mark, wherein the connecting component is positioned opposite an optical sighting device equipped with a reticule, with the assistance of the awls engaged in the radial holes of the outer body the internal element containing a polarisation-maintaining monomode optical fibre is displaced until the centre of the elliptical core of the fibre or the centre of the circular core surrounded by an elliptical restraining element coincides with the centre of the reticule of the optical device, whereupon, by means of a relative rotation of the sleeve (18) and of said outer body (1) of the connecting component, the axes of the elliptical core of the fibre or the axes of the elliptical restraining element which surrounds the circular core coincide with the axes of the reticule of the optical device, whereupon the sleeve is immobilised in relation to the body in the attained angular position, in particular by adhesion.

2. A method as claimed in Claim 1, characterised in that the immobilisation of the sleeve (18) in relation to the body (1) is achieved by injecting resin into the radial orifices (20) of said sleeve.

3. A method as claimed in one of Claims 1 and 2, characterised in that an indexing mark (19) is formed on said sleeve (18) to indicate the said attained angular position.

4. A method as claimed in Claim 3, characterised in that the indexing mark (19) is formed by a groove.

Fig. 1

Fig. 2a

Fig. 2b

Fig. 2c

Fig. 3

Fig. 4

Fig. 5